# FASCICULE DE BREVET EUROPEEN

(11) **EP 0 773 879 B1**
(45) Date de publication et mention de la délivrance du brevet: **08.07.1998**
(21) Numéro de dépôt: 95926994.5
(22) Date de dépôt: 31.07.1995
(51) Int. Cl.: B62M 23/02, B62K 17/00, B63H 9/06

(54) **GREEMENT NOTAMMENT POUR BICYCLETTE**
RIGG, INSBESONDERE FÜR FAHRRAD
RIGGING, PARTICULARLY FOR BICYCLES

(30) Priorité: 01.08.1994 FR 9409514
(43) Date de publication de la demande: 21.05.1997
(73) Titulaire: Carn, Tanguy, 29700 Plomelin (FR)
(72) Inventeur: Carn, Tanguy, 29700 Plomelin (FR)
(74) Mandataire: Viard, Jean
(86) Numéro de dépôt international: FR9501024
(87) Numéro de publication internationale: WO9604166

(56) Documents cités:
- EP-A- 0 129 212
- WO-A-85/00336
- DE-A- 3 208 340
- FR-A- 1 156 952

## Description

La présente invention a pour objet un gréement symétrique aux qualités aérodynamiques améliorés et au maniement simplifié permettant à son utilisateur de conserver une grande liberté de mouvement, notamment sur une bicyclette en maintenant les qualités intrinsèques de pédalage, évolution, encombrement de celle-ci et en permettant de garder les mains libres pour tenir le guidon quelles que soient les conditions d'utilisation ou de transport du gréement hors utilisation.

De nombreux systèmes de propulsion éolienne appliquée aux bicyclettes ont été proposés jusqu'ici. Ils exigent des manoeuvres difficiles ou bien ne sont pas adaptés aux allures proches du vent.

La présente invention a pour but de remédier à ces inconvénients grâce à la synthèse de différents réalisations existantes notamment des améliorations apportées aux gréements faisant l'objet du brevet EP-A-0 151 591, de FR-A-1 156 952 et du brevet allemand DE-A 3208340.

Le gréement selon l'invention est défini par la revendication 1.

FR-A-1 156 952 décrit une voile elliptique ou circulaire orientée par rapport au bateau par des bielles, fils ou câbles. DE-A 3208340 décrit un cadre vélique composé d'éléments horizontaux et verticaux. Enfin, EP-A-0 151 591 décrit un cadre elliptique démontable constitué de deux montants flexibles réunis par leurs extrémités elles-mêmes reliées par un tendeur permettant de modifier le cintrage des montants et par suite le creux de voile, ce tendeur passant à l'extérieur d'un espar horizontal fixé aux montants.

Selon la présente invention, le gréement est rendu dissymétrique par déformation latérale du cadre constitué de deux montants verticaux et de deux barres horizontales unissant les extrémités des montants, cette déformation étant obtenue par sollicitation transversale du tendeur unissant les barres verticales qui lui-même est solidaire de l'espar horizontal unissant les montants au moyen d'un tangon pivotant à partir du milieu de l'espar.

Selon une autre caractéristique de l'invention, le gréement est associé à une bicyclette grâce à deux bras coudés, fixés par une articulation aux côtés du gréement, qui sont engagés dans deux tubes parallèles situés de part et d'autre du cadre de la bicyclette, pivotants autour d'un axe horizontal solidaire du cadre. Les deux tubes supportent par ailleurs, les éléments d'une potence entourant la colonne de direction et comportant à son extrémité une commande pour contrôler la position et le profil du gréement. Cette commande peut être un cordage passant dans une poulie fixée à la potence et reliant une partie du gréement, notamment le tendeur du gréement.

Selon une autre caractéristique du gréement, la voile est munie sur son pourtour d'un lacet dont le serrage permet d'envelopper les montants et barres du gréement dans le repli de la voile de telle façon que la surface de voile présente un extrados aérodynamique par rapport aux montants.

D'autres caractéristiques et avantages de l'invention apparaîtront au cours de la description qui va suivre de modes particuliers de réalisation, donnés uniquement à titre d'exemples non limitatifs, en regard des dessins qui représentent :
- La figure 1 représente, de profil, un gréement selon l'invention équipant une bicyclette ;
- la figure 2 représente, en coupe, le montage de la voile sur les montants du même gréement ;
- la figure 3 représente, de dessus, le même gréement rendu du dissymétrique par déplacement latéral du tendeur. Le gréement est représenté jusqu'au niveau de l'espar horizontal;
- la figure 4 représente, en perspective, le support du même gréement adapté à une bicyclette;
- la figure 5 représente, de profil, le même gréement en position horizontale au dessus d'une bicyclette ;
- fa figure 6 représente, de profil, un cycliste transportant le gréement plié, emballé et saisi sur les bras engagés dans le support de bicyclette .

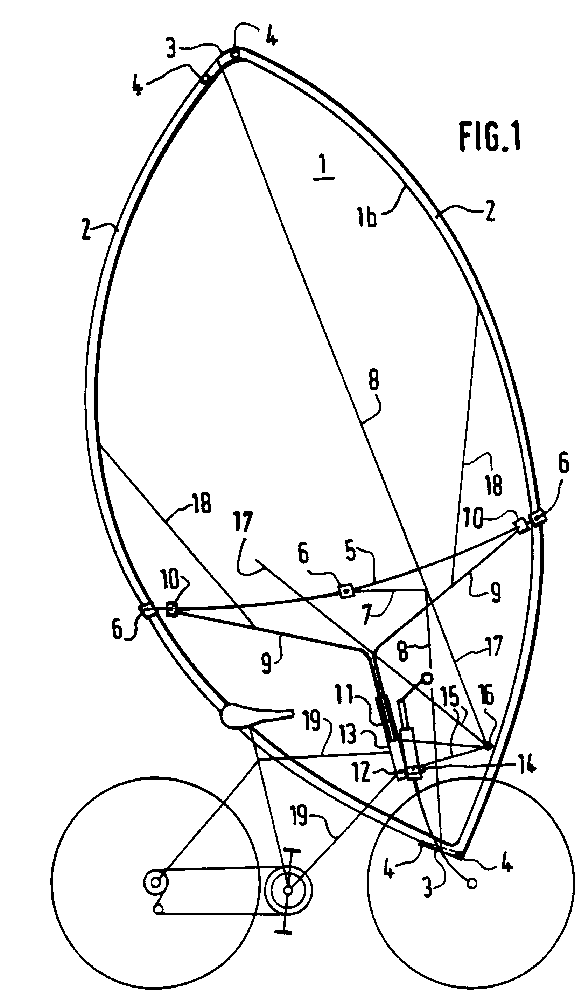

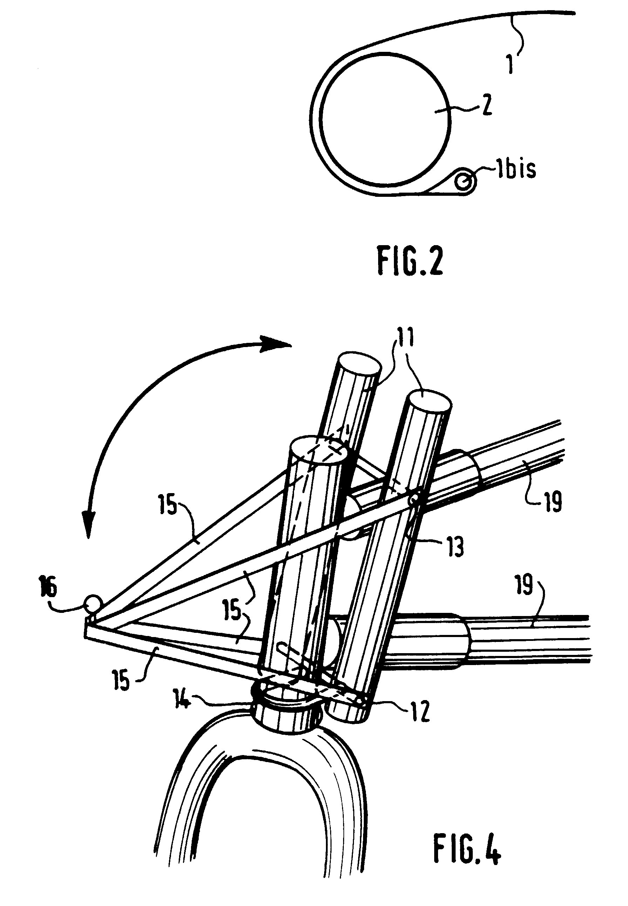

Sur les figures 1 et 2, la voile 1 est tendue sur les montants 2 et les barres 3 en les enveloppant dans un repli ceinturé par un lacet Ibis (Fig 2) dont le serrage permet de contrôler l'enveloppement. Les barres 3 sont réunies aux extrémités haute et basse des montants 2 par des articulations 4 autorisant la déformation du quadrilatère ainsi défini. Un tendeur médian 8, réglable en longueur, réunit les deux barres 3 en passant à l'extrémité d'un tangon 7 monté sur l'espar 5 par une articulation 6. Sur l'espar 5 sont rapportés deux bras 9 par deux articulations 10. Les bras sont coudés et leurs extrémités sont tourillonnées dans deux tubes 11.

Sur la figure 4 apparaît le support de gréement de manière plus détaillée : les tubes 11 comportant des plats sont situés de part et d'autre du cadre 19 par deux axes 12 et 13. L'axe 12 est monté fixe au dessous du cadre 19 dans un étrier 14 qui entoure la colonne de direction du vélo. Cette axe 12 permet le basculement des tubes 11 d'avant en arrière. L'axe 13 est situé au dessus du cadre 19. Solidaires des tubes 11, quatre tiges 15 assemblées à l'une de leurs extrémités constituent une potence indéformable basculant de haut en bas. A l'extrémité de la potence 15, une poulie 16 permet le passage d'une commande 17 fixée au tendeur 8 du gréement. Le cadre 19 est protégé des frictions des tubes 11 par des gaines plastiques.

La figure 3 illustre la déformation dissymétrique de la voile par la poussée de l'espar 5 provoquée par le tangon 7 lorsque le tendeur 8 s'oriente du côté du bord d'attaque de la voile 1. En effet, sur ce bord, le montant 2 a tendance à se décintrer, provoquant le mouvement des barres 3 qui se rapprochent du prolongement du montant 2 situé au bord de fuite. Ainsi le creux de voile se déplace vers l'avant, augmentant l'efficacité de la voile.

Le cycliste non représenté sur la figure 1, est susceptible de manoeuvrer la commande 17 fixée à un harnais de poitrine dont le mouvement d'avant en arrière provoque la traction sur la commande 17 qui accomplit cinq fonctions :
- augmenter la tension du câble 8 et ainsi creuser la voile 1 par cintrage des montants 2,
- modifier le profil de la voile 2 par déplacement du creux de voile vers l'avant,
- agir comme écoute de voile en augmentant l'angle de celle-ci par rapport à la trajectoire du véhicule,
- basculer le gréement vers l'arrière par sollicitation de la potence 15 vers le haut et diminuer ainsi la poussée latérale sur la roue avant,
- solliciter l'inclinaison du gréement vers l'horizontale par traction du tendeur 8 vers le bas.

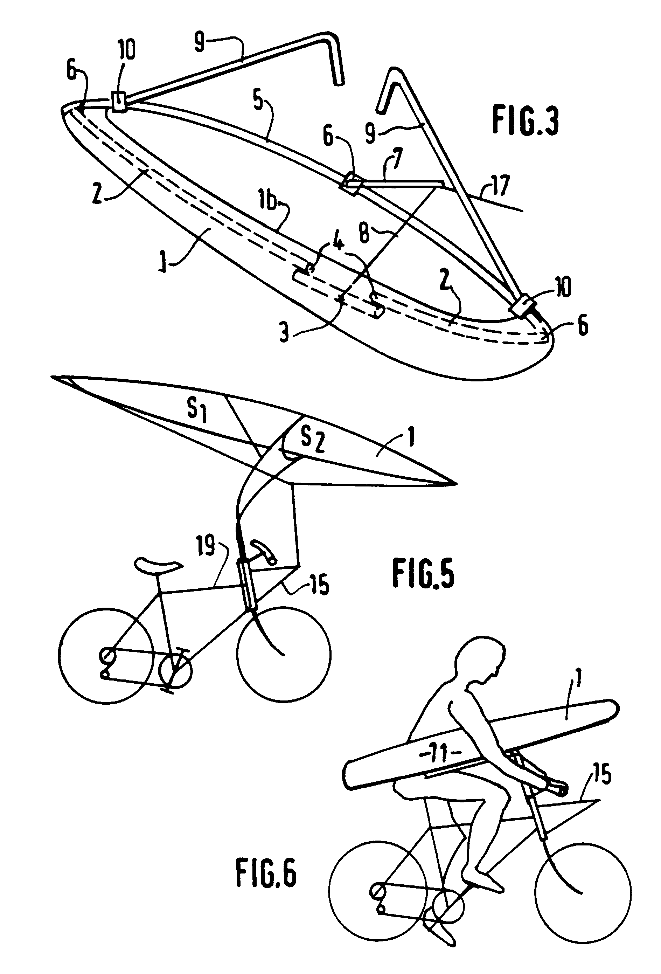

La figure 5 illustre cette inclinaison horizontale qui est, par ailleurs, obtenue automatiquement lors des changements de bord lorsque le montage des bras 9 sur le gréement 2 est fait à une hauteur qui délimite une surface S1 plus grande que S2, S1 et S2 étant les surfaces de voile respectivement au dessus et au dessous des extrémités des bras. Le changement de bord s'effectue au moment du changement de direction,
a) par inclinaison de la voile à l'horizontale à cause de la poussée du vent sur l'extrados
b) par rotation du gréement dans le lit du vent
c) par rotation et redressement du gréement à cause de la poussée du vent sur l'intrados. Ce changement d'amure peut être facilité par le cycliste en poussant les bras 9 dans le sens attendu. De la même façon, les réglages de voile peuvent se faire avec peu d'effort puisque la résultante du vent passant par le centre de voilure passe près du centre de traction. La sauvegarde du cycliste, en cas de "survente", est assurée par un mouvement de redressement sur la selle qui provoque, grâce au harnais de poitrine, l'effacement de la voile par rapport au vent.

Pour la sécurité, il est prévu deux gardes 18 dessinées sur la figure 1 qui joignent les montants du gréement aux bras 9 et interdisent au bas du gréement de venir au contact de la bicyclette au cas où, pour une raison quelconque, la commande 17 n'est pas tenue par le cycliste.

La figure 6 permet de se rendre compte que le transport du gréement plié et emballé, porté sur les bras 9 engagés vers l'arrière dans le support 11 ne gêne nullement le cycliste pour se déplacer à l'aide des pédales. En outre, après démontage des bras 9, le support représenté sur la figure 4 peut rester en place en permanence sur la bicyclette, ce qui limite le temps de mise en oeuvre du gréement.

La présente invention ne se limite pas aux bicyclettes mais peut être utilisée sur tout véhicule terrestre ou nautique susceptible d'être mu par le vent.

Il va de soi que de nombreuses variantes peuvent être apportées, notamment par substitution de moyens techniques équivalents, sans sortir pour cela du cadre de l'invention.

## Revendications

1. Gréement notamment pour une bicyclette (19) ou autre véhicule, comprenant une voile (1) et un support (11) de montage de la voile sur la bicyclette ou autre véhicule, la voile (1) étant tendue sur deux montants flexibles (2) sur lesquels est fixé un tendeur (8) caractérisé en ce que la voile (1) est tendue sur un cadre comprenant les deux montants flexibles (2) réunis à leurs extrémités par deux barres (3) au moyen d'articulations (4), les barres (3) étant, au repos, perpendiculaires à la direction du tendeur (8), l'action sur le tendeur (8) transformant la forme symétrique du cadre (2, 3) en une forme dissymétrique.

2. Gréement selon la revendication 1, caractérisé en ce qu'il comprend un espar (5) sur lequel est articulé par une extrémité (6) un tangon (7) dont la seconde extrémité est montée coulissante sur le tendeur (8).

3. Gréement selon la revendication 1, caractérisé en ce que la voile (1) est tendue sur les montants (2) et les barres (3) en les enveloppant au moyen d'un lacet périphérique (Ibis) réglable.

4. Gréement selon la revendication 1, caractérisé en ce que l'espar (5) est solidaire de deux bras (9) formant support de maintien en position latérale par rapport au véhicule (19) propulsé par le vent.

5. Gréement selon les revendications 1 à 4, caractérisé en ce que chaque bras (9) présente un coude, l'extrémité opposée à l'articulation (10) étant montée pivotante dans l'un des deux tubes parallèles du support (11) assemblés de part et d'autre du cadre du véhicule (19) pour permettre le maintien ou l'inclinaison du gréement dans un plan parallèle à l'axe du véhicule (19), les tubes (11) étant assemblés par un axe horizontal (12) situés au dessous du cadre du véhicule (19), l'axe (12) étant supporté par un étrier (14) fixée à la colonne de direction du véhicule.

6. Gréement selon la revendication 5, caractérisé en ce que les tubes (11) sont assemblés par un deuxième axe (13) passant au dessus du cadre (19) pour permettre le basculement des tubes (11) autour de l'axe inférieur (12), les tubes (11) comportant une potence (15) dirigée vers l'avant.

7. Gréement selon la revendication 6, caractérisé en ce que le support (11) comprend une potence (15) dirigée vers l'avant constituée de quatre tiges passant de part et d'autre de la colonne de direction, fixées aux tubes du support (11) par les axes (12, 13), une poulie (16) étant montée à l'extrémité avant de la potence (15).

8. Gréement selon la revendication 7, caractérisé en ce qu'une commande (17) de traction, solidaire de l'utilisateur par une de ses extrémités, passe sur la poulie (16), la seconde extrémité de la commande (17) étant reliée au tendeur médian (8).

9. Gréement selon les revendications 1 et 5, caractérisé en ce que son inclinaison, par rapport au cadre (19) de la bicyclette, est limitée par un système de gardes (18).

## Patentansprüche

1. Rigg, insbesondere für ein Fahrrad (19) oder ein anderes Fahrzeug, das ein Segel (1) und eine Montagehalterung (11) für das Segel an dem Fahrrad oder dem anderen Fahrzeug umfaßt, wobei das Segel (1) auf zwei flexible Holme (2) gespannt ist, auf denen ein Spannmittel (8) festgelegt ist,
**dadurch gekennzeichnet, daß**
das Segel (1) auf einen Rahmen gespannt ist, der die beiden flexiblen Holme (2) enthält, die an ihren Enden mit zwei Zwischengliedern (3) mittels Gelenkverbindungen (4) verbunden sind, wobei die Zwischenglieder (3) in einem Ruhezustand lotrecht zur Richtung des Spannmittels (8) orientiert sind, und wobei ein Einwirken auf das Spannmittel (8) die symmetrische Form des Rahmens (2, 3) in eine unsymmetrische Form überführt.

2. Rigg nach Anspruch 1, dadurch gekennzeichnet, daß es eine Latte (5) umfaßt, auf der ein Schwingbaum (7) an seinem einen Ende (6) mittels einer Gelenkverbindung montiert ist, wobei dessen zweites Ende gleitend an dem Spannmittel (8) festgelegt ist.

3. Rigg nach Anspruch 1, dadurch gekennzeichnet, daß das Segel (1) auf die Holme (2) und die Zwischenglieder (3) gespannt ist, wobei es sie mittels einer einstellbaren umlaufenden Leine (lbis) umschließt.

4. Rigg nach Anspruch 1, dadurch gekennzeichnet, daß die Latte (5) mit zwei Haltearmen (9) verbunden ist, die ein Haltemittel für das Halten des Segels in einer seitlichen Stellung bezüglich des durch den Wind angetriebenen Fahrzeuges (19) darstellen.

5. Rigg nach den Ansprüchen 1 bis 4, dadurch gekennzeichnet, daß jeder Haltearm (9) eine Abwinklung aufweist, wobei das der Gelenkverbindung (10) entgegengesetzte Ende drehbar in einem der beiden parallelen Rohre des Trägermittels (11) festgelegt ist, die auf beiden Seiten des Rahmens des Fahrzeugs (19) angebracht sind, um das Halten oder das Neigen des Segelriggs in einer zur Fahrzeugachse des Fahrzeug (19) parallelen Ebene zu ermöglichen, wobei die Rohre (11) durch eine horizontale Achse (12) verbunden sind, die unterhalb des Rahmens des Fahrzeuges (19) liegt, wobei die Achse (12) mittels einer Halterung (14) gehalten wird, die an der Lenksäule des Fahrzeugs festgelegt ist.

6. Rigg nach Anspruch 5, dadurch gekennzeichnet, daß die Rohre (11) durch eine zweite Achse (13) verbunden sind, die oberhalb des Rahmens (19) verläuft, um das Schwenken der Rohre (11) um die untere Achse (12) zu ermöglichen, wobei die Rohre (11) mit einem Ausleger (15) versehen sind, der nach vorne gerichtet ist.

7. Rigg nach Anspruch 6, dadurch gekennzeichnet, daß die Halterung (11) einen Ausleger (15) umfaßt, der nach vorne zeigt und aus vier Stangen besteht, die auf beiden Seiten der Lenksäule verlaufen und an die Rohre der Halterung (11) mittels der Achsen (12, 13) festgelegt sind, wobei ein Seilblock (16) an das vordere Ende des Auslegers (15) montiert ist.

8. Rigg nach Anspruch 7, dadurch gekennzeichnet, daß ein Zug-Steuermittel (17), das mit einem seiner Enden mit dem Benutzer verbunden ist, über den Seilblock (16) läuft, wobei das zweite Ende des Zug-Steuermittels (17) mit dem Spannmittel (8) verbunden ist.

9. Rigg nach den Ansprüchen 1 und 5, dadurch gekennzeichnet, daß seine Neigung bezüglich des Rahmens (19) des Fahrrads durch ein Sicherheitssystem (18) begrenzt wird.

## Claims

1. Rigging, in particular for a bicycle (19) or other vehicle, the rigging comprising a sail (1) and a support (11) for mounting the sail on the bicycle or other vehicle, the sail (1) being tensioned over two flexible uprights (2) having a tension member (8) fixed thereto, the rigging being characterized in that the sail (1) is tensioned on a frame comprising the two flexible uprights (2) united at both ends by two bars (3) via hinges (4), the bars (3), at rest, being perpendicular to the direction of the tension member (8), action on the tension member (8) changing the symmetrical shape of the frame (2, 3) into an asymmetrical shape.

2. Rigging according to claim 1, characterized in that it includes a spar (5) on which one end (6) of a boom (7) is hinged, with the second end of the boom being slidably mounted on the tension member (8).

3. Rigging according to claim 1, characterized in that the sail (1) is tensioned on the uprights (2) and the bars (3) by being enveloped around them by means of adjustable peripheral lacing (1bis).

4. Rigging according to claim 1, characterized in that the spar (5) is secured to two rods (9) forming a support for maintaining lateral position relative to the vehicle (19) propelled by the wind.

5. Rigging according to claims 1 to 4, characterized in that each rod (9) has a bend, the end remote from the hinge (10) being pivotally mounted in one of two parallel tubes of the support (11) secured on either side of the frame of the vehicle (19) to enable the rigging to be held or tilted in a plane parallel to the axis of the vehicle (19), the tube (11) being assembled together by means of a horizontal pin (12) situated beneath the frame of the vehicle (19), the pin (12) being supported by a bracket (14) fixed to the steering column of the vehicle.

6. Rigging according to claim 5, characterized in that the tubes (11) are assembled together by a second pin (13) passing above the frame (19) to enable the tubes to tilt about the bottom pin (12), the tubes (11) including a forwardly-directed jib (15).

7. Rigging according to claim 6, characterized in that the support (11) includes a forwardly-directed jib (15) constituted by four rods passing on either side of the steering column, fixed to the support tubes (11) via the pins (12, 13), and a pulley (16) being mounted at the front end of the jib (15).

8. Rigging according to claim 7, characterized in that a traction control (17) secured to the user at one of its ends, passes over the pulley (16) with the second end of the control (17) being connected to the middle tension member (8).

9. Rigging according to claims 1 and 5. characterized in that the inclination of the rigging relative to the frame (19) of the bicycle is limited by a system of guards (18).
